(19) Europäisches Patentamt
European Patent Office
Office européen des brevets

(11) EP 0 632 773 B1

(12) EUROPEAN PATENT SPECIFICATION

(45) Date of publication and mention
of the grant of the patent:
22.10.1997 Bulletin 1997/43

(21) Application number: 93904267.7

(22) Date of filing: 26.02.1993

(51) Int. Cl.⁶: **B64C 21/10**, B63B 1/34

(86) International application number:
PCT/GB93/00407

(87) International publication number:
WO 93/19981 (14.10.1993 Gazette 1993/25)

(54) **CONTROL OF FLUID FLOW**

STEUERUNG EINER FLÜSSIGKEITSSTRÖMUNG

REGULATION D'UN ECOULEMENT DE FLUIDE

(84) Designated Contracting States:
**DE FR GB**

(30) Priority: 31.03.1992 GB 9207000

(43) Date of publication of application:
**11.01.1995 Bulletin 1995/02**

(73) Proprietor: **ROLLS-ROYCE plc**
**London, SW1E 6AT (GB)**

(72) Inventor: **SAVILL, Anthony, Mark**
**Cambridge CB2 2NQ (GB)**

(74) Representative: **Dargavel, Laurence Peter**
**Rolls-Royce plc**
**Patents Department**
**P.O. Box 31**
**Moor Lane**
**Derby DE24 8BJ (GB)**

(56) References cited:
**DE-C- 845 900**          **US-A- 4 930 729**

Printed by Rank Xerox (UK) Business Services
2.14.18/3.4

## Description

This invention relates to the modification of boundary layer flows over fluid dynamic surfaces, which may be aerodynamic or hydrodynamic surfaces. It is particularly concerned with the use of small-geometry surface configurations comprising rib-like elements to modify heat, mass or momentum transport by controlling interaction of a boundary layer of the flow with the surface.

There have been many investigations in recent years of the effects that small-geometry surface configurations can have on turbulent boundary layers. Particular attention has been paid to the provision of so-called riblet surfaces in which an array of small longitudinal rib-like elements known as riblets extend over the turbulent boundary layer region of a wall surface in the direction of fluid flow over the surface, to reduce momentum transport or drag. This effect is seen to be the result of reducing the turbulent bursting rate, ie. the rate of break up of the low speed longitudinal vortices that characteristically form a turbulent boundary layer close to the wall.

The prior art frequently refers to "streaks" rather than longitudinal vortices, although strictly speaking a streak is merely the visible manifestation of vortices in smoke tunnel experiments, and the present specification will follow this practice.

The results reported show that although the effect of riblets may be beneficial it is rather small for practical purposes and that has led to the search for alternative geometries and combinations of techniques offering larger benefits.

A number of particular riblet configurations are disclosed in US 4930729 with the aim of offering an improved performance by exploiting different effects. In one such configuration, there are spaced larger height riblets between each successive pair of which are a plurality of smaller height projections. The smaller height riblets are sized in height and in projection-to-projection spacing to inhibit turbulent eddy motions in the boundary layer from penetrating deep between adjacent riblets, while the larger height riblets are sized in height and in projection-to-projection spacing to constrain spanwise distribution of streaks in the boundary layer.

Another configuration described in US 4930729 comprises riblets disposed in a repeated spanwise pattern in which the adjacent riblets in each pattern repeat project to different heights. In its simplest form, in which there are alternating higher and lower riblets, the lower riblets function to inhibit turbulent eddy motions in the boundary layer from penetrating to all parts of the wall surface, in particular deep into the grooves between the riblets, which results in a displacement of the turbulent motion away from the wall to establish a virtual surface some 3/4 of the height of the lower riblets above the basic wall surface. The higher riblets can be so scaled in relation to the lower riblets and the boundary layer thickness that they have the function of extending this effect.

There is also described in US 4930729 a configuration in which the heights of the riblets are increased progressively along the length. Because of the modification of the boundary layer by an array of riblets, if the configuration of the riblets is constant along their length their effect will in general become progressively weakened as the flow moves along them. The progressive increase of height of the riblets acts counter this self-limiting effect.

It is an object of the present invention to provide further means whereby the flow over wall surfaces can be beneficially modified, whether in respect of momentum transport (to reduce surface drag) or heat transport (to improve heat transfer characteristics between the fluid flow and the wall) or mass transport (to achieve more favourable dispersal or retention of substances held on the wall surface).

According to the present invention there is provided a fluid dynamic wall surface provided with a series of elongate projections extending substantially in the direction of fluid flow relative to the surface for modifiying the interaction of a boundary layer of said fluid flow with said surface, the surface having an upstream region in which said boundary layer is laminar, a downstream region in which said boundary layer is turbulent and a transitional flow region located between said upstream and downstream regions characterised by said projections in the upstream region being scaled in proportion to the boundary layer thickness, at least some of the projections in the downstream region having an initial height in the range of 2 to 45 wall units a wall unit being designed as $\sqrt{(t/p)}/v$ where t is the wall thickness stress, p is the fluid density and v is the fluid kinematic viscosity, and increasing in height progressively in the direction of the fluid flow, said projections extending substantially continuously from said upstream region through said transition region and into said downstream region.

The projections in said transition region may be scaled to the boundary layer displacement thickness or their heights may be adjusted along their length to blend with the downstream heights of the projections in the upstream region and with the upstream heights of the projections in the downstream region. Where the different scalings would give abrupt changes of height of the projections, it may be preferred to make the projections discontinuous so that there is a short gap between the differently scaled portions; the modified configuration can still be regarded as a substantially continuous array.

Control of the fluid flow in the transition region by means of the projections helps to retard the tendency of the flow in this region to transform from an essentially two dimensional flow to a three dimensional flow. It can therefore reduce the resultant drag by delaying the onset of fully turbulent flow.

Particularly where there is turbulent flow, in a preferred configuration according to the present invention, the projections, or at least the larger height projections where there are projections of different heights, have side faces that are inclined at an angle that varies over the height of the projections, each said side face having an intermediate region at a lesser steepness than the adjacent regions above and below said region and forming the lower part of a concave profile peak of the associated projection. This form of profile is disclosed in US 4930729, to which reference can be made for further details.

In the various forms that can be taken by different embodiments of this invention, the projections are preferably disposed in a substantially continuous spanwise array. It is also preferred that projections, whether the larger or smaller, are formed with sharp-peaked profiles.

In one embodiment of the invention, there is provided a fluid dynamic wall surface which is provided with a series of elongate projections extending in the direction of fluid flow relative to the surface to reduce heat, mass and momentum transport by controlling interaction of boundary layer flow with said surface, said projections having heights which, when expressed in wall units, change with distance along the wall surface in the direction of fluid flow at a rate per metro given by the expression

S% + V% + R% + F% per metre length, with the ranges 5 < S% < 10; 10 < R% < 20; 0 < V% < 300; -80 < F% < 500,
where

S% is a percentage rate of change in height for acting against the reduction in wall shear stress, and hence the self-limiting effect of the projections, caused by progressive displacement of boundary layer turbulence away from the wall surface by the projections,

R% is a percentage rate of change in height for acting against the effect of skin friction variation, and hence the variation of effective height of a uniform height projection, and other Reynolds Number dependent effects, independent of wall surface curvature and pressure gradient in the fluid flow thereover;

V% is a percentage rate of change in height to take advantage of an inherent ability of increasing height projections to move boundary layer turbulence further from the wall surface than constant height projections of the same initial upstream height;

F% is a percentage rate of change in height for acting against the effect of skin friction variation caused by the presence of such other effects as those from LEBU's introduced upstream of the projections, streamwise pressure gradients, or streamwise curvature of the wall surface, and natural variations of skin friction through the transition region.

As is customary in the art, the heights of the projections are measured from the basic wall surface from which they project. Furthermore the sizes and dimensional relationships of the riblets of the variables are expressed in the non-dimensional form of so-called "law of the wall", in which actual distance values are multiplied by a "wall unit" scalar quantity defined as:

$$\frac{\sqrt{(t/p)}}{v}$$

where

t    is the wall shear stress,
p    is the fluid density, and
v    is the fluid kinematic viscosity.

It should be noted that if $C_f$ (coefficient of skin friction) increases sharply, as in the early stage of transition, the factor F referred to above may give negative variations. That is to say the height of the projections may then decrease in height along the direction of the fluid flow.

In turbulent flow conditions the projections function to inhibit turbulent motions in the boundary layer from penetrating to all parts of the wall surface, in particular deep into the grooves, resulting in a displacement of the turbulent motion away from the wall. With regard to the factor S, the progressive increase of the height of the projections can extend those effects without disrupting the flow pattern. A secondary benefit arises because the self-limiting tendency of the flow, due to the fact that a virtual wall position is created at a substantial part of the initial height of the projections, is opposed by the increase of the projection height. The increase of projection height can therefore counter the degradation of their performance that would otherwise result from that tendency.

This benefit can be enhanced with varying height projections because the progressive reduction of wall shear stress with streamwise development length already referred to can be countered by increase of height of the projections in the factor V. The height increase can more than compensate for the degradation of performance that the change of virtual wall position would produce on fixed height projections.

More specifically, in a region of turbulent flow, for a wall surface which is essentially flat in the streamwise direction and is provided with varying height projections optimised for a streamwise pressure gradient in fluid flow thereover which is essentially zero, the projections preferably have a rate of increase in non-dimensionalised (wall unit) height in the range of 15% to about 300% per metre length.

Whether or not the change of projection height is made in a continuous manner, at the onset of transition flow and at the end of transition flow relatively sharply changing height projections may be required to optimise for the sharp decrease in skin friction which occur at the onset of transition (giving decreasing height projections) and increase in skin friction at the last stage of transition (giving increasing height projections).

With regard to the rate of change of height F%, for a wall surface which is essentially flat in the streamwise direction and which is operating in a turbulent boundary layer region with at least one tandem LEBU device the projections increase in wall unit height by up to about 125% per metre length for a distance equivalent to about 30 to 40 boundary layer thicknesses downstream of the LEBU device.

To compensate for streamwise pressure gradients, the height variation F% will give an increase or decrease of height depending on whether the streamwise pressure gradient is positive or negative. For optimum results, the factor F% will alter the non-dimensionalised wall unit height of the projections by an amount per unit length which is sufficient to counteract the change in skin friction of the fluid flow caused by the pressure gradient.

If, as is preferable, the projections form a continuous spanwise array, an increase in the aspect ratio of the projection transverse cross-section with distance along the wall surface can be utilised to give the increased height. Alternatively, there can be advantages in forming the array with projections whose transverse cross-sections have an aspect ratio that is maintained essentially constant with change of height; at its leading end, such a pattern will have the bases of the projections separated by spaces, which may be simply flat-bottomed valleys, these spaces progressively narrowing as the projections grow in the direction of the fluid flow. Whether formed as a continuous spanwise array or with spaces at least in the upstream regions of the projections in some instances it may be possible to allow the projections to spread fanwise as they increase in height.

The variation of height along the length of the projections is preferably arranged as a continuous increase (or decrease) of height, the projections then appearing as "ramplets". A simpler arrangement, although possibly less efficient, would be to provide succeeding bands of higher projections but the projections of each band having a uniform height. The bands are assembled together to present to the fluid flow a series of projections with progressively stepped increasing heights. The projections of successive bands may also be arranged at different pitches.

Because riblets are intended to interact with the streaks of turbulent boundary layer flow they are regarded essentially as turbulent flow control devices, since the longitudinal vortices or streaks they control to produce their beneficial effect do not occur in laminar flow. However, although the literature is almost exclusively concerned with turbulent flow regimes it has indeed recently been shown by both experiments and numerical computations (J Liandrat, E Coustols, L Djenidi, F Anselmet, X de Saint-Victor, F Fioc & L Fulachier: "Effect of Riblets on either fully developed Boundary Layers or Internal Flows in Laminar Regime", in "Turbulence Control by Passive Means" (Ed: E Coustols: Klumen Academic Publishers 1990) that the basic riblets can reduce drag by up to about 2.5% even in laminar flow due solely to their influence on the viscous very near wall flow.

Of particular significance in the context of the use of varying height projections in the present invention is the value of such projections for the modification of laminar fluid flow over a wall surface.

In providing a series of said projections in a region of laminar flow, said projections are given a height of between 0.03 and 0.2 of the boundary layer thickness, preferably not substantially less than 0.1 of said boundary layer thickness. That is to say, the height of the projections increases in the direction of the fluid flow by an amount scaled to the local boundary layer thickness.

It will be understood, therefore, that the present invention offers the possibility of modifying the fluid flow over a wall surface. Of particular significance to the invention as it relates to the use of riblet wall surfaces outside the turbulent flow region is the ability to employ riblets that begin in the laminar flow region so as to extend the laminar flow limit further downstream and thereby limit the rise in skin friction associated with the transitional flow region.

By continuing an appropriately scaled pattern of riblets through the onset of transition and into the region in which turbulent flow has become fully established, it is possible to obtain reduction of drag that is significant in relation to the drag of the complete wall surface.

By way of example, embodiments of the invention will now be described in more detail with reference to the accompanying schematic drawings. In the drawings:-

Figure 1 illustrates in a pair of triangular cross-section projections or riblets that can form part of an array of such riblets on a wall surface, in accordance with the present invention,

Figures 2 to 6 illustrate a number of modifications that can be applied individually or in combination to the configuration in Figure 1, and

Figures 7 to 12 illustrate some combined versions of the wall surfaces described with reference to the preceding figures.

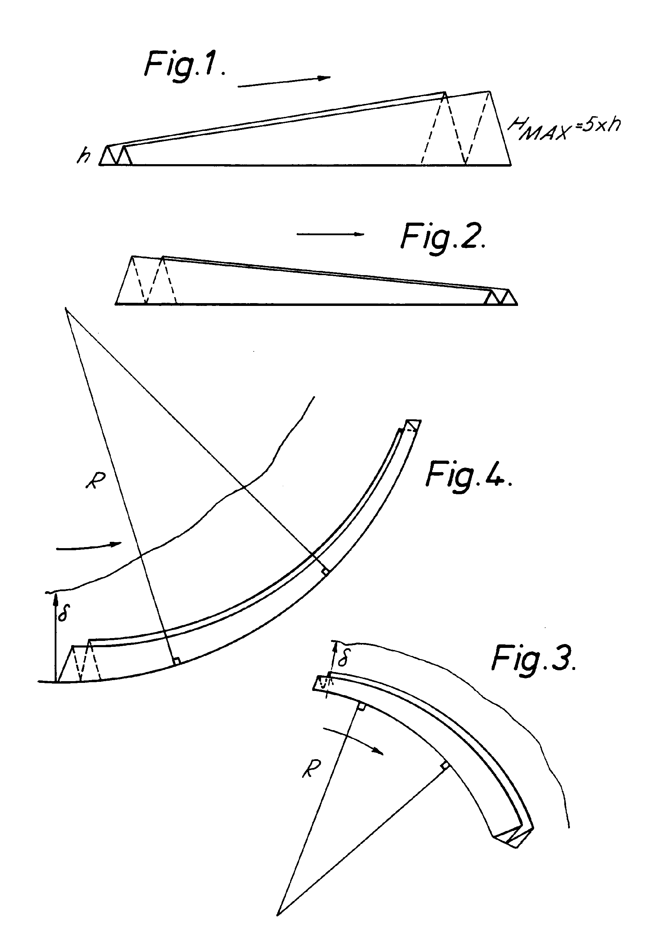

Figure 1 shows two of a continuous series of riblets running in the arrowed streamwise direction along a fluid dynamic wall surface. The riblets increase in height along their length (on account of which they may be termed "ramplets"). If the riblets are provided on a planar basic surface with fluid flow thereover having a zero pressure gradient, in terms of non-dimensional "law of the wall" units the optimum rate of increase of riblet height for the illustrated configuration will be at least 15%. This is made up from a 5% to 10% rate per metre to compensate for the self-limiting effect and about a 10 to 20% rate per metre to compensate for the effect of skin friction variation and other Reynolds number effects. Allowing for the fact that skin friction is a function of velocity, the total optimum rate as a continuous increase of height might in practice be up to 50% per metre or even higher, up to about 300% per metre, the latter figure being attainable because of the ability of the progressively increasing height riblets to force the turbulent boundary layer flow further away from the basic wall surface.

The riblet heights and change of height in this and all subsequent examples are of course related to non-dimensionalised "law of the wall" units.

If it is assumed in Fig. 1, however, that there is an adverse pressure gradient in the direction of flow, then under a severe pressure gradient, e.g. such that separation is likely to occur within one metre in the flow direction, the skin friction coefficient may drop by up to 0.004 per metre. To counter this in full would require an increase in non-dimensional riblet height of 600% per metre length. In fact, it will not be desirable to utilise a large rate of increase in riblet height if it encourages boundary layer separation, or if the disadvantage of increased drag on the riblets at off-design flow regimes outweighs the advantage of reduced drag at the flow regime for which the riblets are designed.

A non-dimensionalised measure of pressure gradient $\beta$ is represented by

$$\beta = \frac{\theta}{\tau_w} \cdot \frac{dp}{dx} = 0.5$$

where

| | |
|---|---|
| $\theta$ is | the boundary layer momentum thickness |
| $\tau_w$ is | the wall shear stress |
| and $\frac{dp}{dx}$ is | the pressure gradient in the direction of flow If $\beta = 0.5$, then an additional rate of increase of height of the riblets is required, equal to about 280% per metre. The increase of non-dimensionalised height per meter might then be continued up to some 500%. |

If there is a favourable pressure gradient, it can be assumed that the wall shear stress and the skin friction coefficient increase, apparently necessitating decreasing height riblets due to the accompanying increase in friction velocity. $\beta$ assumes a negative value and the overall effect can be as shown in Fig. 2, with a progressive decrease in height from the favourable pressure gradient more than compensating for the increase in height to counter other influences, so that the resultant riblet height decreases in the direction of the fluid flow. If the example $\beta=-0.2$ then a decrease in the height of the riblet of about 20% per metre is required.

The curvature of the wall surface in the direction of flow will also affect the optimum change of height of the riblets in dependence upon the $\delta$ measure of the boundary layer thickness (eg. $\delta_{995}$). The severity of curvature in the direction of fluid flow with respect to the effect on the boundary layer is proportional to the ratio $\delta$/radius of curvature, a typical value being about 0.05 for, say, the upper surface of an aircraft wing or an aeroengine nacelle. On such a surface, skin friction may drop by about 0.0015 per metre, which suggests that riblets on such surfaces should increase in non-dimensionalised height by about 130% per metre.

In the example of Fig. 3, with the uniformly curved surface having an angle of arc of -45° per metre length and the radius of curvature R of the surface and the boundary layer $\delta$ being in the ratio of about 10:1, the increase of riblet height required by the curvature in the arrowed direction of flow is approximately 40% per unit length.

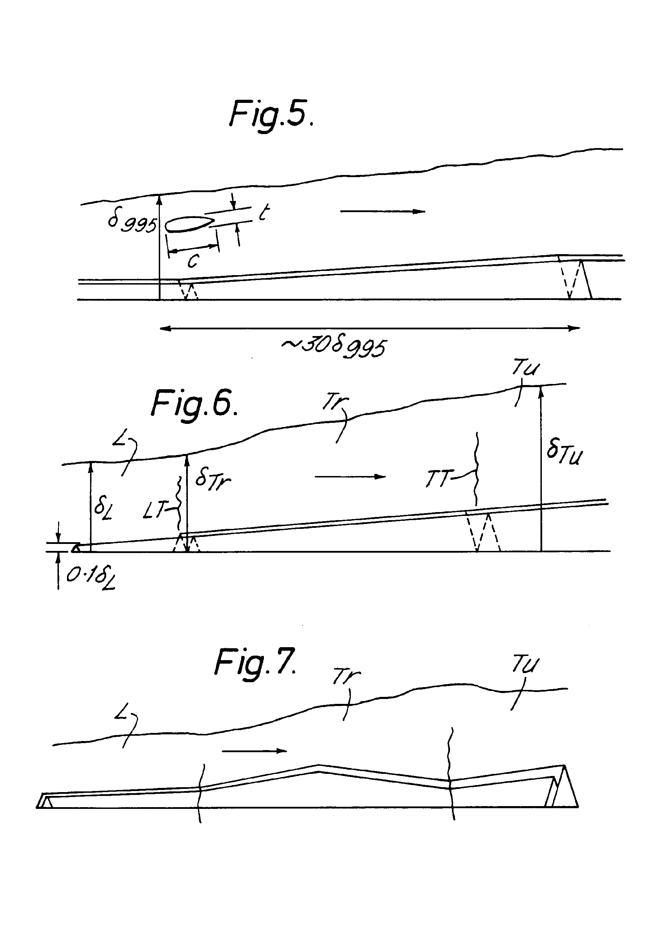

With a concavely curved surface such as the pressure surface of an aerofoil, the situation is the converse of the convexly curved surface and skin friction increases, again apparently necessitating decreasing height riblets. Taking the example of Fig. 4, with uniformly curved surface having an angle of arc of +45° per metre length and R:$\delta$ at about 10:1 as before, the increase of skin friction would require a decrease of riblet height of approximately 10% per unit length.

It might be thought that in the examples above of decreasing riblet height the rate at which the height should decrease would be as much as 85% or (say) 25% per metre length respectively by analogy with the respective examples showing an increasing height. However, this is not the case for two reasons.

Firstly, the boundary layer turbulence does not respond to favourable and unfavourable pressure gradients or to concavely and convexly curved surfaces in equal proportions, the response for favourable pressure gradients and concavely curved surfaces being about half that for the converse situations. This of course means that the decrease of riblet height, considered in isolation from other factors, would only be up to 65% or (say) 30% per metre length respectively.

Secondly, one of the important objects of increasing the heights of the riblets in the streamwise direction is to increase the effect of the riblets in inhibiting penetration of boundary layer turbulence into the grooves and increase the height of the virtual surface with respect to the riblets. Excluding decreasing skin friction effects, the optimum rate of increase in riblet height to take advantage of this ability of increasing height riblets to force the boundary layer turbulence further away from the basic wall surface is in the range of about 15 to 300% per metre, assuming zero pressure gradient flow over a plane basic wall surface. The actual optimum rate of change in a favourable pressure gradient (Fig. 2) would therefore be in the range of about 65% to 15% and for a concavely curved surface the optimum would be in the range of a decrease of about 33% to an increase of 215%.

A further factor influencing riblet height is the presence of a large eddy break-up device (LEBU) immediately upstream of the riblets. In fact there are advantages in deploying riblets is in conjunction with LEBU's because they can prolong the effective stream length in which the drag reduction effects of the LEBU's are experienced.

In Fig. 5 a LEBU 100 is located within the thickness $\delta$ (more specifically $\delta_{995}$) of the boundary layer over a wall surface at a height some $0.7\delta$. Typically the LEBU may have the sectional profile of an asymmetrical inverted aerofoil (eg. NACA 4409) with a chord length C approximately $1.2\delta$ and a maximum thickness t approximately 0.09 chord length. The interaction of the LEBU and the riblets might continue over a region extending downstream from the LEBU for a distance of about $30\delta$ and in that distance the riblet height might increase about 15% on account of the LEBU.

If the riblets extend upstream and downstream of the region of interaction, in these regions they may be of constant height, as shown in Fig. 5, or have their heights varied in accordance with other influences present there, but configurations are known in which several LEBU's follow in series. Thus, in Fig. 4 of US Patent 4706910 of Walsh et al a constant height riblet surface has superposed LEBU's tandem-mounted in flow series at intervals of 100 to 200 boundary layer thicknesses. Therefore, as an example of the combination of increasing height riblets with LEBU's, consider a tandem LEBU device optimised for maximum drag reduction, comprising two LEBU's placed in flow series with respect to each other, with a distance of about 10 boundary layer thicknesses ($10\delta$) between the two.

A reasonable estimate for such a case is that the skin friction coefficient $C_f$ ($= \tau/\frac{1}{2}\rho U^2$, where $\rho$ is the fluid density and U is the velocity at the edge of the boundary layer) may reduce by up to 50% until it reaches its greatest reduction at a distance of 30 to $40\delta$ downstream of the tandem device, measured from a point, say, midway, between the two LEBU's. Since the non-dimensionalised height of the riblets as determined by the "law of the wall" relationship depends upon the square root of the shear stress, and therefore of the local skin friction and friction velocity, it can easily be calculated that to maximise both the local and greatest reductions in skin friction, riblets extending 30 - $40\delta$ downstream of the LEBU's should increase in non-dimensional height by approximately 125% over this length downstream of the LEBU's.

Beyond the location of the maximum skin friction reduction it is found that skin friction is very nearly constant for about a further 80 - $100\delta$, so over this further distance the riblets should continue to run at the height they have reached at the downstream ends of their increase of height.

If riblets are deployed in laminar or transition flow conditions their height may require to be adapted to those conditions, in contrast to the turbulent flow conditions that have been assumed in the preceding examples. In Fig. 6 is shown a configuration in which a constant rate of increase of height has been chosen as a compromise solution, so that the performance of the riblets will not be significantly affected by shifts in the beginning and/or end of the transition region.

The riblets in Fig. 6 may begin at or very close to the leading edge of the wall surface over the laminar flow region L and their height is initially $0.1\delta_L$ where $\delta_L$ is the local boundary layer thickness. Over the laminar flow region the riblets can be given a constant height but preferably there is some progressive increase to compensate for the increase of boundary layer height. In the turbulent flow region Tu, the initial height of the riblets and the factors affecting the progressive increase of that height have already been discussed in US 4930729 and in the preceding pages and the riblets will be correspondingly scaled in non-dimensionalised wall units. In the example of Fig. 6, the height of the riblets in the transition region Tr is kept equal to $\delta \approx 0.1\delta$. However, adjacent the boundaries LT and TT with the laminar and turbulent regions respectively the riblet height is blended with the height in the laminar and turbulent regions so that there is no abrupt change. If, due to changes in flow conditions, the transition region should become displaced a little one way or the other the riblet heights will still be appropriate to the changed conditions.

Alternatively if optimum scaling for the transition flow is required, it is necessary to take account of the changes of skin friction which falls in the early stage of transition then rises sharply in the later stage of transition before entering a low Reynolds No. turbulent flow regime in which it falls faster than in early transition or in the higher Reynolds No. fully turbulent flow. A change of height such as is shown in Fig. 7 would then be required.

In the laminar flow region L of Fig. 7, as before, the riblet height increases with the local boundary layer displacement thickness $\delta_L$ and is approximately $0.1\delta_L$. In the early stage of the transition region Tr a similar rate of increase may be maintained but will be stopped before the height has increased to more than 50% of its value at entry to the transitional region. Over the second stage of transition region Tr the riblet height decreases but not to less than about 60% of the maximum height reached. The decrease of height is terminated as the flow begins to become turbulent and the height now increases at a rate which permits it to blend smoothly with the riblet height required at the beginning of the fully turbulent region Tu.

It will be understood from some of the preceding comments that in making the changes of increase or decrease of riblet height it is generally desirable to blend the changes into each other and avoid discontinuities which could trigger primitive changes of flow regime.

It is also possible to employ riblets as a transition trip. A length of less than $10\delta$ might be needed. These riblets are preferably faired into the wall surface to their ends or continue from the laminar flow riblets but with their height increasing from $1\delta_L^*$ to $5\delta_L^*$ maximum.

It will be understood that the preceding examples have discussed separately each of a number of factors which affect optimum riblet height. In practice, the different factors present in any particular case must be combined to give an optimum resultant change of height which may be positive or negative.

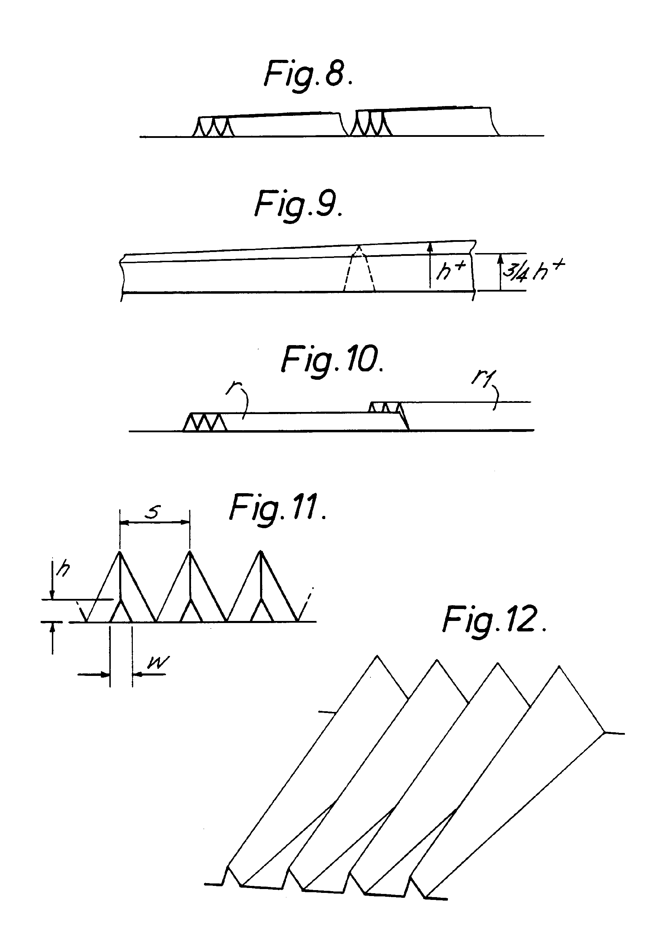

Where the illustrated examples discussed so far have triangular profile riblets they may have other profiles, such as the sharp peaks (apex included angle preferably not greater than 20°) with rounded valleys shown in Figure 8. It may be desirable for practical reasons to blunt the points of inflection or the peaks of the riblet faces, while these faces may comprise straight and/or curved portions both below and above a virtual wall surface without unduly changing the general character of the profile required for the functions described. Furthermore, while the riblets have been shown with base widths equal to their heights at their upstream ends it may be preferred to increase the base widths to as much as about three times the upstream end heights of the respective riblets; this is particularly but not solely, relevant to cusp-shaped profiles shown in Figure 8. In some of the preceding examples, the riblets have a constant base width but their height changes continuously along their length, in the manner already defined, to give them a varying profile.

Figure 9 illustrates another form of profile that can be employed for the riblets of the present invention, in particular for turbulent flow. It is assumed that the riblets, having a non-dimensionalised height $h^+$, establish a virtual wall surface at about $0.75h^+$. Below that level there is a V-groove profile, whereas there is a change of slope at that level, from which the riblets extend with sharp-peaked concave profiles. The differently profiled regions are adapted to different functions. The regions below the virtual wall surface form relatively deep V-grooves that are better able to inhibit penetration of turbulent eddy motions, while the concave faces above the virtual wall surface can more effectively promote very small scale longitudinal vortices which drain energy from the larger streaks in the turbulent boundary layer flow.

In the example of Figure 9, for the riblets to perform their functions effectively the concave faces should form relatively sharp-edged peaks. Since $h^+$ is itself increased with distance along the direction of fluid flow, the point of transition of the profile also rises along the length of the riblet.

Figures 10 to 12 show two alternative patterns of riblets which have a streamwise increase of height but which may lend themselves to simpler production methods.

Figure 10 is a low aspect perspective view showing increase of riblet height in a series of steps, as shown by the riblets $r_1$ succeeding the riblets r. The uniform height lengths can be produced relatively easily by machining or extrusion, and if required at each step the leading edges of the riblets can be faired. The pitch of the riblets can similarly be progressively increased at each stage, not necessarily simultaneously with an increase of height.

In the preceding examples it may be convenient to keep the base widths of the riblets constant, the cross-sectional aspect ratio varying with the height. In the configuration of Figures 11 and 12, which show end elevation and perspective views, the base width w increases with height h to maintain a constant aspect ratio h/w and constant pitch spacing s. If made as a moulding it will be clear that the mould tool can be formed by changing the cutting depth an appropriately profiled milling tool, and also that such a tool can be easily controlled to give the riblets non-uniform changes of height.

The preceding examples have all shown riblets which, at any plane perpendicular to the local flow, have a uniform height. As disclosed in US 4930729, however, it is often possible to obtain benefits from using patterns of different height riblets. It should be clear without further exemplification that these patterns of riblets or ramplets can readily be adopted for use in the present invention, especially for turbulent flow regions.

In all cases, it may improve performance, if, at their leading edges, the riblets are faired into the wall surface or are recessed to avoid drag increments associated with the flow meeting a bluff leading face. For reducing wetted area it may also be possible at least in turbulent flow to have short spanwise-extending gaps as seen in Figure 8 (less than the boundary layer thickness $\delta$ in the streamwise direction) between riblet areas (themselves greater than $2\delta$ in streamwise length) without sacrificing the advantages offered by the riblets, although this may result in increased pressure drag. Furthermore, it is not essential that the riblets be aligned precisely with the fluid stream and a variety of experimental studies have shown that in turbulent flow at least, deviations of up to 10° - 15° can be tolerated. Because of the improved control of vortex structure another advantage of riblets in the form of ramplets may be an increased tolerance to yaw ie the maintenance of drag reduction to angles exceeding ±15°.

The invention is generally applicable to the wall surfaces of bodies in which a reduction of skin friction is sought. It may thus provide a means of reducing drag on the external surfaces of vehicles, including aircraft, land vehicles and watercraft. It can also be used in machines, e.g. for the blading, both rotating and stationary, of turbo-machines, and for the internal surfaces of pipes and conduits. It will be understood that the invention includes the possibility of forming the surface projections integrally with the bodies concerned and also of providing surface elements, e.g. as sheets or tapes, having the projections, for application to bodies to provide the required surface configurations thereon.

The description of the drawings has referred mainly to the drag reduction effects that can be obtained using the invention, by means of momentum transport. This is only one of the potential benefits offered by the invention. Because of the influence on flows close to a wall surface it is similarly possible to modify heat transfer rates between a wall surface and a flow over that surface. The patterns of riblets can also be used to modify the transfer of materials, as when it is required to release a coating material into a fluid flow at a controlled rate; it will be clear from the preceding description that if the material to be released is held deep between adjacent projections it will pass into the fluid more slowly because the projections have moved the local high velocity areas, such as the streaks, further out.

**Claims**

1. A fluid dynamic wall surface provided with a series of elongate projections (r) extending substantially in the direction of fluid flow relative to the surface for modifiying the interaction of a boundary layer of said fluid flow with said surface, the surface having an upstream region in which said boundary layer is laminar (L), a downstream region in which said boundary layer is turbulent (Tu) and a transitional flow region (Tr) located between said upstream and downstream regions

   characterised by said projections (r) in the upstream region being scaled in proportion to the boundary layer thickness, at least some of the projections in the downstream region having an initial height in the range of 2 to 45 wall units a wall unit being designed as $\sqrt{(t/p)}/v$ where t is the wall thickness stress, p is the fluid density and v is the fluid kinematic viscosity, and increasing in height progressively in the direction of the fluid flow, said projections extending substantially continuously from said upstream region through said transition region and into said downstream region.

2. A wall surface according to claim 1 characterised in that the projections (r) in said transition region (Tr) have heights which change along their length to blend with the downstream heights of the projections in the upstream region and with the upstream heights of the projections in the downstream region.

3. A wall surface according to claim 1 or claim 2 characterised in that said projections (r) in said upstream region have a height in the range of 0.03 to 0.2 of the momentum boundary layer thickness.

4. A wall surface according to any one of claims 1 to 3 characterised in that said projections (r) in said upstream region have a height not substantially less than 0.1 of the boundary layer thickness.

5. A wall surface according to any one of claims 1 to 4 charaterised in that the projections (r) decrease in height in the direction of flow within the transitional region (Tu).

6. A wall surface according to any one of claims 1 to 5 characterised in that the projections (r) increase in height in the direction of fluid flow in said upstream region at a rate of between 20% and 100% per meter length.

7. A wall surface according to any one of the preceding claims charaterised in that the projections are spaced from each other at their upstream ends and have base widths which vary with their height whereby a progressive increase in height of said projections (r) is accompanied by a decrease in the spacing between said projections along their longitudinal extent.

8. A wall surface according to claim 6 characterised in that said spacings between the projections (r) comprise flat-bottomed valleys substantially coplanar with the wall surface.

9. A wall surface according to any one of the preceding claims characterised in that said projections extend downstream from the onset of transitional flow from said laminar flow to to limit the rise of skin friction at least in an intermediate region in which the fluid flow is transitional.

10. A wall surface according to any one of the preceding claims characterised in that said projections have a height within the laminar flow region of between 0.03 and 0.2 of the boundary layer thickness and the height of the projections is reduced at the onset of the transition region.

**Patentansprüche**

1. Fluiddynamische Wandoberfläche, die mit einer Reihe langgestreckter Vorsprünge (r) versehen ist, die sich im wesentlichen in der Richtung der Fluidströmung relativ zur Oberfläche erstrecken, um das Zusammenwirken einer Grenzschicht der Fluidströmung mit der Oberfläche zu modifizieren, wobei die Oberfläche einen stromaufwärtigen Bereich besitzt, in dem die Grenzschicht laminar (L) verläuft, einen stromabwärtigen Abschnitt, in dem die Grenzschicht turbulent (Tu) ist, und einen Übergangsströmungsbereich (Tr) zwischen dem stromaufwärtigen und dem stromabwärtigen Bereich,
   dadurch gekennzeichnet, daß die Vorsprünge (r) im stromaufwärtigen Bereich proportional zur Grenzschichtdicke skaliert sind und wenigstens einige der Vorsprünge im stromabwärtigen Bereich eine anfängliche Höhe im Bereich von 2 bis 45 Wandeinheiten besitzen, wobei eine Wandeinheit gekennzeichnet ist als $\sqrt{(t/p)}/v$, wobei t die Wanddickenbeanspruchung, p die Fluiddichte und v die kinematische Viskosität des Fluid ist, und wobei die Höhe progressiv in Richtung der Fluidströmung ansteigt und die Vorsprünge sich im wesentlichen kontinuierlich von dem stromaufwärtigen Bereich durch den Übergangsbereich und in den stromabwärtigen Bereich hinein erstrecken.

2. Wandoberfläche nach Anspruch 1,
   dadurch gekennzeichnet, daß die Vorsprünge (r) im Übergangsbereich (Tr) eine Höhe aufweisen, die sich über ihre Länge ändert, um mit den stromabwärtigen Höhen der Vorsprünge im stromaufwärtigen Bereich überzugehen und mit den stromaufwärtigen Höhen der Vorsprünge im stromabwärtigen Bereich.

3. Wandoberfläche nach den Ansprüchen 1 oder 2, dadurch gekennzeichnet, daß die Vorsprünge (r) im stromaufwärtigen Bereich eine Höhe im Bereich von 0,03 bis 0,2 der Momenten-Grenzschichtdicke aufweisen.

4. Wandoberfläche nach einem der Ansprüche 1 bis 3, dadurch gekennzeichnet, daß die Vorsprünge (r) im stromaufwärtigen Bereich eine Höhe besitzen, die nicht wesentlich kleiner ist als 0,1 der Grenzschichtdicke.

5. Wandoberfläche nach einem der Ansprüche 1 bis 4, dadurch gekennzeichnet, daß die Vorsprünge (r) in der Höhe in Richtung der Strömung innerhalb des Übergangsbereichs (Tr) abfallen.

6. Wandoberfläche nach einem der Ansprüche 1 bis 5, dadurch gekennzeichnet, daß die Vorsprünge (r) in der Höhe in Richtung der Fluidströmung im stromaufwärtigen Bereich mit einer rate zwischen 20 % und 100 % pro Meter Länge ansteigen.

7. Wandoberfläche nach einem der vorhergehenden Ansprüche, dadurch gekennzeichnet, daß die Vorsprünge voneinander an ihren stromaufwärtigen Enden distanziert sind und eine Basisbreite besitzen, die sich über ihre Länge ändert, wodurch eine progressive Vergrößerung in der Höhe der Vorsprünge (r) begleitet ist von einer Verminderung des Abstandes zwischen den Vorsprüngen längs ihrer Längserstreckung.

8. Wandoberfläche nach Anspruch 6, dadurch gekennzeichnet, daß die Abstände zwischen den Vorsprüngen (r) Täler mit flachem Boden sind, der im wesentlichen in einer Ebene mit der Wandoberfläche liegt.

9. Wandoberfläche nach einem der vorhergehenden Ansprüche, dadurch gekennzeichnet, daß sich die Vorsprünge stromab von Beginn der Übergangsströmung von der laminaren Strömung zur Grenze des Anstiegs der Hautreibung in wenigstens einem Zwischenbereich erstrecken, in dem die Fluidströmung im Übergangsbereich verläuft.

10. Wandoberfläche nach einem der vorhergehenden Ansprüche, dadurch gekennzeichnet, daß die Vorsprünge eine Höhe innerhalb des laminaren Strömungsbereichs zwischen 0,03 und 0,2 der Grenzschichtdicke besitzen und die Höhe der Vorsprünge zu Beginn des Übergangsbereichs vermindert ist.

## Revendications

1. Surface de paroi dynamique au fluide pourvue d'une série de projections allongées (r) s'étendant sensiblement dans la direction de l'écoulement de fluide par rapport à la surface pour modifier l'interaction d'une couche limite dudit écoulement de fluide avec ladite surface, la surface ayant une région amont dans laquelle ladite couche limite est laminaire (L), une région aval dans laquelle ladite couche limite est turbulente (Tu) et une région d'écoulement transitoire (Tr) située entre les régions amont et aval, caractérisée en ce que lesdites projections (r) dans la région amont sont dimensionnées en proportion à l'épaisseur de la couche limite, au moins certaines des projections dans la région aval ayant une hauteur initiale dans la domaine de 2 à 45 unités de paroi, une unité de paroi étant désignée comme

$$\frac{\sqrt{(t/p)}}{v}$$

où t est la contrainte d'épaisseur de paroi, p est la densité du fluide et v est la viscosité cinématique du fluide, lesdites projections augmentant en hauteur progressivement dans la direction de l'écoulement de fluide, lesdites projections s'étendant sensiblement de manière continue à partir de ladite région amont à travers ladite région de transition et dans ladite région aval.

2. Surface de paroi selon la revendication 1, caractérisée en ce que les projections (r) dans la région de transition (Tr) ont des hauteurs qui changent avec leur longueur pour se confondre avec les hauteurs aval des projections dans la région amont et avec les hauteurs amont des projections dans la région aval.

3. Surface de paroi selon la revendication 1 ou la revendication 2, caractérisée en ce que lesdites projections (r) dans la région amont ont une hauteur de l'ordre de 0,03 à 0,2 de l'épaisseur de couche limite cinématique.

4. Surface de paroi selon l'une quelconque des revendications 1 à 3, caractérisée en ce que lesdites projections (r) dans ladite région amont ont une hauteur pas sensiblement inférieure à 0,1 de l'épaisseur de couche limite.

5. Surface de paroi selon l'une quelconque des revendications 1 à 4, caractérisée en ce que les projections (r) diminuent en hauteur dans la direction d'écoulement à l'intérieur de la région transitoire (Tr).

6. Surface de paroi selon l'une quelconque des revendications 1 à 5, caractérisée en ce que les projections (r) augmentent en hauteur dans la direction de l'écoulement de fluide dans ladite région amont à un taux situé entre 20% et 100 % par mètre de longueur.

7. Surface de paroi selon l'une quelconque des revendications précédentes, caractérisée en ce que les projections sont espacées les unes des autres à leur extrémité amont et ont des largeurs de base qui varient avec leur hauteur, une augmentation progressive en hauteur desdites projections (r) s'accompagnant ainsi d'une diminution de l'espacement entre lesdites projections le long de leur étendue longitudinale.

8. Surface de paroi selon la revendication 6, caractérisée en ce que lesdits espacements entre les projections (r) comprennent des vallées à fond plat sensiblement coplanaires à la surface de paroi.

9. Surface de paroi selon l'une quelconque des revendications précédentes, caractérisée en ce que lesdites projections s'étendent en aval dès l'apparition de l'écoulement transitoire à partir dudit écoulement laminaire pour limiter l'apparition de frottement de peau au moins dans une région intermédiaire dans laquelle l'écoulement de fluide est transitoire.

10. Surface de paroi selon l'une quelconque des revendications précédentes, caractérisée en ce que les projections ont une hauteur à l'intérieur de la région d'écoulement laminaire située entre 0,03 et 0,2 de l'épaisseur de couche limite et la hauteur des projections est réduite à l'abord de la région transitoire.

Fig.1.

$H_{MAX} = 5 \times h$

Fig.2.

Fig.4.

Fig.3.

## Fig.5.

$\delta_{995}$    $c$    $t$

$\sim 30\,\delta_{995}$

## Fig.6.

$Tr$    $Tu$

$\delta_{Tu}$

$L$    $\delta_{Tr}$    $TT$

$\delta_L$    $LT$

$0.1\,\delta_L$

## Fig.7.

$Tr$    $Tu$

$L$

Fig.8.

Fig.9.

Fig.10.

Fig.11.

Fig.12.